(19) Europäisches Patentamt
European Patent Office
Office européen des brevets

(11) **EP 3 165 424 B1**

(12) **EUROPÄISCHE PATENTSCHRIFT**

(45) Veröffentlichungstag und Bekanntmachung des Hinweises auf die Patenterteilung:
**22.08.2018  Patentblatt 2018/34**

(51) Int Cl.:
**B62D 15/02** (2006.01)

(21) Anmeldenummer: **16192600.1**

(22) Anmeldetag: **06.10.2016**

(54) **VERFAHREN ZUM BESTIMMEN EINES RADLENKWINKELS VON LENKBAREN RÄDERN EINES KRAFTFAHRZEUGS UNTER BERÜCKSICHTIGUNG DES DREHMOMENTS, STEUEREINRICHTUNG, FAHRERASSISTENZSYSTEM SOWIE KRAFTFAHRZEUG**

METHOD FOR DETERMINING A WHEEL STEERING ANGLE OF STEERABLE WHEELS OF A MOTOR VEHICLE, TAKING INTO ACCOUNT THE TORQUE, CONTROL DEVICE, DRIVER ASSISTANCE SYSTEM AND MOTOR VEHICLE

PROCÉDÉ DE DÉTERMINATION D'UN ANGLE DE BRAQUAGE DE ROUE DE ROUES DIRIGEABLES D'UN VÉHICULE À MOTEUR EN TENANT COMPTE DU COUPLE DE ROTATION, DE LA DIRECTION DE COMMANDE, DU SYSTÈME D'ASSISTANCE DU CONDUCTEUR AINSI QUE DU VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2015  DE 102015118542**

(43) Veröffentlichungstag der Anmeldung:
**10.05.2017  Patentblatt 2017/19**

(73) Patentinhaber: **Valeo Schalter und Sensoren GmbH**
**74321 Bietigheim-Bissingen (DE)**

(72) Erfinder:
• **Niestoruk, Lukasz**
**74321 Bietigheim-Bissingen (DE)**
• **Weirich, Christoph**
**74321 Bietigheim-Bissingen (DE)**
• **Bammert, Jens**
**74321 Bietigheim-Bissingen (DE)**
• **Heimberger, Marco**
**74321 Bietigheim-Bissingen (DE)**

(56) Entgegenhaltungen:
EP-A1- 2 492 168          EP-A2- 2 022 703
EP-A2- 2 886 422          WO-A1-2005/085042
WO-A1-2011/002346          DE-A1-102010 039 130
JP-A- 2007 269 251          US-A1- 2003 212 476
US-A1- 2010 108 432

# Beschreibung

Die vorliegende Erfindung betrifft ein Verfahren zum Bestimmen eines aktuellen Radlenkwinkels von lenkbaren Rädern eines Kraftfahrzeugs, bei welchem ein Lenkwinkel, welcher mittels einer Lenkeinrichtung des Kraftfahrzeugs nach einem Durchführen eines Lenkmanövers vorgegeben wird, mittels einer Sensoreinrichtung erfasst wird und anhand einer vorbestimmten Abbildungsvorschrift, welche eine Abhängigkeit eines erwarteten Radlenkwinkels von dem Lenkwinkel beschreibt, der erwartete Radlenkwinkel bestimmt wird. Darüber hinaus betrifft die vorliegende Erfindung eine Steuereinrichtung für ein Fahrerassistenzsystem eines Kraftfahrzeugs. Zudem betrifft die vorliegende Erfindung ein Fahrerassistenzsystem sowie ein Kraftfahrzeug.

Bei heutigen Fahrerassistenzsystemen wird häufig eine Information über die Eigenbewegung des Kraftfahrzeugs benötigt. Zur Berechnung der Eigenbewegung und/oder der Position des Kraftfahrzeugs werden die Daten von verschiedenen Fahrzeugsensoren benötigt. Beispielsweise können Weginformationen der jeweiligen Räder mit Hilfe entsprechender Radsensoren erfasst werden, welche sogenannte Weggeberimpulse bereitstellen und somit die Anzahl von Radumdrehungen bzw. die Radgeschwindigkeit messen. Darüber hinaus ist es bekannt, dass die Gierrate und/oder die Beschleunigung des Kraftfahrzeugs mit entsprechenden Sensoren erfasst wird. Zum Bestimmen der Eigenbewegung des Kraftfahrzeugs können zusätzlich die Informationen von einem Satellitennavigationssystem, beispielsweise GPS, herangezogen werden.

EP 2 886 422 A2 beschreibt ein Verfahren zum Bestimmen eines aktuellen Lenkwinkels eines Kraftfahrzeugs mittels einer Fahrerassistenzeinrichtung des Kraftfahrzeugs durch Erfassen einer vom Fahrer des Kraftfahrzeugs an einem Lenkrad eingestellten aktuellen Auslenkung von lenkbaren Rädern des Kraftfahrzeugs durch eine Auslenkungserfassungseinrichtung und Bestimmen des aktuellen Lenkwinkels in Abhängigkeit von der aktuellen Auslenkung unter Verwendung einer abgelegten Lenkwinkelübersetzungskennlinie.

WO 2005/085042 A1 betrifft ein Verfahren zum Bestimmen und Anpassen einer Lenkhandhabewinkel-Radlenkwinkel-Kennlinie, wobei ein aktueller Radlenkwinkel oder eine den aktuellen Radlenkwinkel beschreibende Größe bestimmt wird; ein aktueller Lenkhandhabewinkel erfasst wird; eine bestehende Kennlinie anhand einer Zuordnung von aktuellem Radlenkwinkel oder diesen beschreibende Größe zum aktuellen Lenkhandhabewinkel korrigiert wird oder aus mehreren solcher Zuordnungen eine Lenkhandhabewinkel-Radlenkwinkel-Kennlinie erzeugt wird.

EP 2 022 703 A2 betrifft eine Fahrzeuglenkwinkelschätzvorrichtung mit Raddrehzahlsensoren zum Erfassen von Drehzahlen von linken und rechten Rädern eines Fahrzeugs.

Zur genaueren Ermittlung der Eigenbewegung oder Position des Kraftfahrzeugs muss der aktuelle Radlenkwinkel, also eine Auslenkung zumindest eines gelenkten Rades des Kraftfahrzeugs, ermittelt werden. Üblicherweise wird der aktuelle Radlenkwinkel unter Verwendung einer entsprechenden Abbildungsvorschrift ermittelt. Eine solche Abbildungsvorschrift kann beispielsweise eine Lenkwinkelkennlinie sein, welche die Abhängigkeit des Radlenkwinkels von einem Lenkwinkel oder der Position einer Spurstange beschreibt. Diese Lenkwinkelkennlinie wird üblicherweise durch den jeweiligen Fahrzeughersteller ermittelt und in einem Speicher des Kraftfahrzeugs abgelegt und dort zur Verfügung gestellt.

Es ist Aufgabe der vorliegenden Erfindung, eine Lösung aufzuzeigen, wie der aktuelle Radlenkwinkel eines Kraftfahrzeugs präziser und zuverlässiger bestimmt werden kann.

Diese Aufgabe wird erfindungsgemäß durch ein Verfahren, durch eine Steuereinrichtung, durch ein Fahrerassistenzsystem sowie durch ein Kraftfahrzeug mit den Merkmalen gemäß den jeweiligen unabhängigen Ansprüchen gelöst. Vorteilhafte Ausführungen der Erfindung sind Gegenstand der abhängigen Ansprüche, der Beschreibung und der Figuren.

Ein erfindungsgemäßes Verfahren dient zum Bestimmen eines aktuellen Radlenkwinkels von lenkbaren Rädern eines Kraftfahrzeugs. Hierbei wird ein Lenkwinkel, welcher mittels einer Lenkeinrichtung des Kraftfahrzeugs nach einem Durchführen eines Lenkmanövers vorgegeben wird, mittels einer Sensoreinrichtung erfasst. Darüber hinaus wird anhand einer vorbestimmten Abbildungsvorschrift, welche eine Abhängigkeit eines erwarteten Radlenkwinkels von dem Lenkwinkel beschreibt, der erwartete Radlenkwinkel bestimmt. Zudem wird eine auf eine Lenkung wirkende Kraft während des Lenkmanövers bestimmt, wobei die Lenkung ein Drehmoment von der Lenkeinrichtung auf die lenkbaren Räder überträgt. Darüber hinaus wird anhand der bestimmten Kraft ein Korrekturwert zum Korrigieren des erwarteten Radlenkwinkels bestimmt.

Mit Hilfe des Verfahrens soll ein aktueller bzw. tatsächlicher Radlenkwinkel bestimmt werden. Dabei wird zunächst ein Lenkwinkel ermittelt, welcher mit einer Lenkeinrichtung des Kraftfahrzeugs vorgegeben wird. Der Fahrer des Kraftfahrzeugs kann den Lenkwinkel mittels der Lenkeinrichtung vorgeben. Diese Lenkeinrichtung kann beispielsweise eine Lenkhandhabe bzw. ein Lenkrad sein, welches von einem Fahrer des Kraftfahrzeugs bewegt bzw. bedient wird. Die Lenkreinrichtung kann auch durch ein anderes Bedienelement, beispielsweise einen Joystick oder ein Tastatur, bereitgestellt werden. Alternativ dazu kann der Lenkwinkel von einem Steuergerät des Kraftfahrzeugs vorgegeben werden. Mit diesem Steuergerät kann dann ein entsprechender Aktor angesteuert werden, mit dem beispielsweise die Lenkstange gedreht wird. Dies kann beispielsweise vorgesehen sein, wenn das Kraftfahrzeug autonom manövriert wird. Der Lenkwinkel kann beispielsweise mit einem entsprechenden Lenkwinkelsensor bestimmt werden. Dabei wird der aktuelle Lenkwinkel nach dem Durchführen eines Lenkmanövers bestimmt. Bei dem Lenkmanöver wird beispielsweise die Lenkeinrichtung von einer ersten Stellung in eine zweite Stellung bewegt. Mit anderen Worten wird während des Lenkmanövers die Lenkung zwischen einem ersten Lenkwinkel und einem zweiten Lenkwinkel verstellt. Zur Bestimmung des Radlenkwinkels, also eines Winkels zwischen einer aktuellen Radebene eines gelenkten Rades und einer Geradeauslaufstellung des Rades, wird üblicherweise eine entsprechende Abbildungsvorschrift verwendet. Diese Abbildungsvorschrift kann beispielsweise eine Lenkwinkelkennlinie, eine Lenkwinkelübersetzungskennlinie oder eine entsprechende Tabelle sein. Diese Abbildungsvorschrift beschreibt den Zusammenhang zwischen dem Radlenkwinkel und dem Lenkwinkel.

Der vorliegenden Erfindung liegt die Erkenntnis zugrunde, dass es sich bei der Lenkung um ein mechanisches System handelt, das entsprechende Elastizitäten aufweist. Die Lenkung beschreibt vorliegend die mechanische Verbindung zwischen der Lenkeinrichtung und den lenkbaren Rädern des Kraftfahrzeugs. Die Lenkung kann beispielsweise die Lenksäule, eine Spurstange und/oder die Radträger umfassen. Vorliegend wird eine auf die Lenkung wirkende Kraft während des Lenkmanövers bestimmt. Dabei kann die auf die Lenkung während des gesamten Lenkmanövers wirkende Kraft bestimmt werden. Die auf die Lenkung wirkende Kraft kann insbesondere in Abhängigkeit von der Zeit bestimmt werden. Zusätzlich kann es vorgesehen sein, dass ein auf die Lenkung wirkendes Drehmoment während des Lenkmanövers bestimmt wird.

Die auf die Lenkung wirkende Kraft ist abhängig von unterschiedlichen Parametern. Diese Parameter können beispielsweise die Beschaffenheit des Untergrunds, die mechanischen Eigenschaften der Reifen, die mechanischen Eigenschaften der Lenkung, die Gewichtskraft des Kraftfahrzeugs, die Art des Lenksystems, Alterungserscheinungen, Temperatureinflüsse oder dergleichen sein.

Beispielsweise kann es der Fall sein, dass die Reibung zwischen den Reifen der lenkbaren Räder und der Fahrbahnoberfläche verhältnismäßig hoch ist. In diesem Fall ist eine verhältnismäßig große Kraft bzw. ein verhältnismäßig großes Drehmoment erforderlich, um die lenkbaren Räder zu bewegen. Hier kann es der Fall sein, dass die lenkbaren Räder nicht so weit bewegt werden, wie erwartet. Hierbei unterscheidet sich der erwartete Radlenkwinkel von dem tatsächlichen Radlenkwinkel. Wenn eine verhältnismäßig große Reibung zwischen den Reifen und der Fahrbahnoberfläche vorhanden ist, kann dies anhand der Kraft, die auf die Lenkung wirkt, bestimmt werden. In Abhängigkeit von der ermittelten Kraft kann dann ein Korrekturwert zum Korrigieren des erwarteten Lenkwinkels bestimmt werden. Somit kann der tatsächliche bzw. der aktuelle Radlenkwinkel bestimmt werden, der sich durch die Korrektur des erwarteten Radlenkwinkels mit dem Korrekturwert ergibt. Auf diese Weise kann der aktuelle Radlenkwinkel in Abhängigkeit von den Umgebungsbedingungen und insbesondere den Reibungsverhältnissen zwischen den lenkbaren Rädern und der Fahrbahnoberfläche zuverlässig bestimmt werden.

Bevorzugt wird die auf die Lenkung wirkende Kraft anhand der Sensordaten zumindest eines Kraftsensors bestimmt, welcher an oder in einer Komponente der Lenkung angeordnet ist. Wie bereits erläutert kann die Lenkung mehrere Komponenten aufweisen. Zur Bestimmung der auf die Lenkung wirkenden Kraft kann zumindest ein Kraftsensor verwendet werden, der beispielsweise an einer Außenseite einer der Komponenten der Lenkung angeordnet ist. Bei dem Kraftsensor kann es sich insbesondere um einen Dehnmessstreifen handeln. Mit Hilfe eines derartigen Kraftsensors kann eine auf die jeweiligen Komponenten wirkende Kraft bestimmt werden. Grundsätzlich kann es auch vorgesehen sein, dass zusätzlich ein auf die Lenkung wirkendes Drehmoment bestimmt wird. In diesem Fall kann ein entsprechender Drehmomentsensor verwendet werden. Auf diese Weise kann die auf die Lenkung wirkende Kraft auf einfache Weise zuverlässig bestimmt werden.

In einer weiteren Ausführungsform ist die Lenkung als Servolenkung ausgebildet, ein von einem Antrieb der Servolenkung während des Lenkmanövers bereitgestelltes Drehmoment wird ermittelt und die auf die Lenkung wirkende Kraft wird anhand des ermittelten Drehmoments bestimmt. Mittels des Antriebs der Servolenkung kann beispielsweise die Kraft reduziert werden, die zur Betätigung des Lenkrads erforderlich ist. Die Servolenkung unterstützt den Fahrer beim Lenken, indem die vom Fahrer aufgebrachte Kraft durch den Antrieb verstärkt wird. Bei dem Antrieb kann es sich beispielsweise um einen hydraulischen Antrieb, einen elektrischen Antrieb oder dergleichen handeln. Beispielsweise kann es vorgesehen sein, dass mit Hilfe eines Drehmomentsensors das von dem Antrieb bereitgestellte Drehmoment bestimmt wird und an die Steuereinrichtung übertragen wird. Anhand der Messungen und/oder mechanischen Eigenschaften der Komponenten der Lenkung, die beispielsweise in der Steuereinrichtung hinterlegt sein können, kann dann die auf die Lenkung wirkende Kraft bestimmt werden.

Bevorzugt ist der Antrieb als elektrischer Antrieb ausgebildet, eine von dem elektrischen Antrieb während des Lenkmanövers benötigte elektrische Energie wird erfasst und das Drehmoment wird anhand der benötigten elektrischen Energie bestimmt. Insbesondere kann der elektrische Strom bestimmt werden, der von dem elektrischen Antrieb während des Lenkmanövers benötigt wird. Der elektrische Strom ist im Wesentlichen proportional zu dem Drehmoment, das mit dem elektrischen Antrieb bereitgestellt wird. Ein entsprechender Messwert, der den elektrischen Strom charakterisiert, kann von dem elektrischen Antrieb selbst bereitgestellt werden und an die Steuereinrichtung übertragen werden. Es kann auch vorgesehen sein, dass der elektrische Strom mit einem entsprechenden Stromsensor erfasst wird und an die Steuereinrichtung übertragen wird. Somit kann auf einfache Weise das von dem elektrischen Antrieb bzw. das von der Servolenkung bereitgestellte Drehmoment bestimmt werden.

Weiterhin ist es vorteilhaft, wenn eine Geschwindigkeit des Kraftfahrzeugs während des Lenkmanövers erfasst wird und der Korrekturwert zusätzlich in Abhängigkeit von der erfassten Geschwindigkeit bestimmt wird. Es kann auch vorgesehen sein, dass der zeitliche Verlauf der Geschwindigkeit während des Lenkmanövers erfasst wird. Insbesondere wird anhand der erfassten Geschwindigkeit bestimmt, ob das Kraftfahrzeug steht oder fährt und der Korrekturwert wird in Abhängigkeit davon bestimmt, ob das Kraftfahrzeug steht oder fährt. Insbesondere kann erfasst werden, ob das Kraftfahrzeug während des Lenkmanövers durchgehend stand bzw. sich im Stillstand befand oder nicht. Es kann auch bestimmt werden, ob sich das Kraftfahrzeug für eine vorbestimmte zeitliche Dauer während des Lenkmanövers im Stillstand befand. Während des Stillstands des Kraftfahrzeugs ist die Reibungskraft zwischen den Rädern und dem Fahrbahnuntergrund am größten. Somit kann beispielsweise die bestimmte Kraft zusätzlich anhand der Geschwindigkeit plausibilisiert werden. Somit kann beispielsweise bestimmt werden, dass sich eine verhältnismäßig große Kraft, die auf die Lenkung wirkt, dadurch ergibt, dass das Kraftfahrzeug momentan stillsteht. Somit kann zuverlässig davon ausgegangen werden, dass beispielsweise der erwartete Radlenkwinkel nicht erreicht wird.

In einer weiteren Ausgestaltung wird eine Temperatur in einem Umgebungsbereich des Kraftfahrzeugs während des Lenkmanövers erfasst und der Korrekturwert wird zusätzlich in Abhängigkeit von der erfassten Temperatur bestimmt. Die Temperatur in dem Umgebungsbereich des Kraftfahrzeugs kann beispielsweise mit einem entsprechenden Temperatursensor bestimmt werden und an die Steuereinrichtung übertragen werden. In Abhängigkeit von der Umgebungstemperatur ändern sich beispielsweise die Reibungseigenschaften zwischen den Reifen und der Fahrbahnoberfläche. Darüber hinaus können sich die mechanischen Eigenschaften der Lenkung in Abhängigkeit von der Temperatur ändern. Diese Umwelteinflüsse können anhand der aktuellen Temperatur im Umgebungsbereich des Kraftfahrzeugs bestimmt werden und bei der Bestimmung des Korrekturwerts berücksichtigt werden. Hierbei kann es grundsätzlich auch vorgesehen sein, dass mit Hilfe von entsprechenden Sensordaten die Beschaffenheit der Fahrbahnoberfläche bestimmt wird. Beispielsweise kann bestimmt werden, ob sich Wasser, Eis oder Schnee auf der Fahrbahnoberfläche befindet. Damit kann der Einfluss der Beschaffenheit der Fahrbahnoberfläche auf die Reibungskraft zwischen den lenkbaren Rädern und der Fahrbahn bestimmt werden und bei der Bestimmung des Korrekturwerts Berücksichtigung finden.

Weiterhin ist es vorteilhaft, wenn anhand der bestimmten Kraft erkannt wird, dass zumindest eines der lenkbaren Räder während des Lenkmanövers auf ein Hindernis trifft und der Korrekturwert in Abhängigkeit davon bestimmt wird, ob das zumindest eine lenkbare Rad auf das Hindernis trifft. Während des Lenkmanövers kann es beispielsweise der Fall sein, dass eines der lenkbaren Räder auf einen Bordstein trifft. Dieser Bordstein stellt für das lenkbare Rad ein Hindernis dar und beeinträchtigt die Bewegung des lenkbaren Rades. Anstelle eines Bordsteins können auch andere Hindernisse auf der Fahrbahn vorhanden sein, welche ein Hindernis für das lenkbare Rad darstellen. Wenn das lenkbare Rad auf das Hindernis trifft, steigt die Kraft, die auf die Lenkung wirkt, deutlich bzw. sprunghaft an. Somit kann beispielsweise anhand eines zeitlichen Verlaufs der Kraft erkannt werden, dass das lenkbare Rad auf das Hindernis trifft. Somit kann beispielsweise davon ausgegangen werden, dass das lenkbare Rad nicht in die gewünschte Stellung bewegt werden kann und somit den erwarteten Radlenkwinkel nicht erreicht.

Zudem kann es vorgesehen sein, dass der Korrekturwert in Abhängigkeit von einer Änderung des Lenkwinkels während des Lenkmanövers bestimmt wird. Wenn die Änderung des Lenkwinkels verhältnismäßig groß ist, wirken sich die elastischen Eigenschaften der Lenkung deutlicher aus als bei einer verhältnismäßig kleinen Änderung des Lenkwinkels. Eine verhältnismäßig große Änderung des Lenkwinkels liegt zum Beispiel vor, wenn von einem Vollausschlag in den anderen gewechselt wird. Eine derartige Situation kann beispielsweise bei Einparkvorgängen vorliegen.

Grundsätzlich kann es auch vorgesehen sein, dass die Gewichtskraft des Kraftfahrzeugs bestimmt wird und bei der Bestimmung des Korrekturwerts Berücksichtigung findet. Die Gewichtskraft, die von dem Kraftfahrzeug bereitgestellt wird bzw. das Gewicht des Kraftfahrzeugs kann in der Steuereinrichtung hinterlegt sein. Es kann auch vorgesehen sein, dass eine Gewichtsverteilung bezüglich des Kraftfahrzeugs bestimmt wird. Beispielsweise kann ein Beladungszustand des Kraftfahrzeugs bestimmt werden. Es kann auch vorgesehen sein, dass die Sitzbelegung des Kraftfahrzeugs entsprechend ausgewertet wird und bei der Bestimmung des Korrekturwertes mit einbezogen wird. Es können auch Eigenschaften der Fahrbahn bestimmt werden und bei der Bestimmung des Korrekturwerts Einfluss finden. Derartige Eigenschaften können beispielsweise die Eigenschaften des Fahrbelags, Beschädigungen der Fahrbahnoberfläche oder eine Neigung der Fahrbahnoberfläche sein. Damit kann der Korrekturwert genau bestimmt werden und somit der tatsächliche Radlenkwinkel präzise bestimmt werden.

Eine erfindungsgemäße Steuereinrichtung für ein Fahrerassistenzsystem eines Kraftfahrzeugs ist zum Durchführen eines erfindungsgemäßen Verfahrens ausgelegt. Die Steuereinrichtung kann beispielsweise durch ein elektronisches Steuergerät (ECU - Electronic Control Unit) des Kraftfahrzeugs gebildet sein. Die Steuereinrichtung kann mit verschiedenen Sensoren des Kraftfahrzeugs zur Datenübertragung, beispielsweise über einen Fahrzeugdatenbus, verbunden sein. Beispielsweise kann die Steuereinrichtung mit einem Lenkwinkelsensor verbunden sein. Darüber hinaus kann die Steuereinrichtung mit einem entsprechenden Kraftsensor und/oder Drehmomentsensor, der die auf die Lenkung wirkende Kraft erfasst, verbunden sein. Die Steuereinrichtung kann auch zur Datenübertragung mit einem Antrieb der Servolenkung verbunden sein.

Bevorzugt ist die Steuereinrichtung dazu ausgelegt, mittels Odometrie eine Position des Kraftfahrzeugs zu bestimmen und die Position anhand des Korrekturwerts für den erwarteten Radlenkwinkel anzupassen. Die Steuereinrichtung kann zudem mit entsprechenden Sensoren verbunden sein, welche Umdrehungen zumindest eines Rades des Kraftfahrzeugs messen. Hieraus kann die aktuelle Geschwindigkeit des Kraftfahrzeugs bestimmt werden. Darüber hinaus kann die Steuereinrichtung die Daten des Lenkwinkelsensors anhand der Abbildungsvorschrift in den erwarteten Radlenkwinkel umrechnen. Hieraus kann dann die aktuelle Position bzw. die Eigenbewegung des Kraftfahrzeugs bestimmt werden. Zudem ist es nun vorgesehen, dass die Steuereinrichtung anhand des Korrekturwerts den tatsächlichen Radlenkwinkel bestimmt und diesen bei der Bestimmung der Position des Kraftfahrzeugs berücksichtigt. Somit kann die aktuelle Position des Kraftfahrzeugs zuverlässig bestimmt werden. Dies ermöglicht es insbesondere, dass das Kraftfahrzeug beispielsweise präzise manövriert werden kann.

Ein erfindungsgemäßes Fahrerassistenzsystem für ein Kraftfahrzeug umfasst eine erfindungsgemäße Steuereinrichtung. Bevorzugt ist das Fahrerassistenzsystem dazu ausgelegt, das Kraftfahrzeug in Abhängigkeit von dem Korrekturwert für den erwarteten Radlenkwinkel zu manövrieren. Mit Hilfe des Fahrerassistenzsystems kann das Kraftfahrzeug beispielsweise semi-autonom bewegt werden. In diesem Fall wird von dem Fahrerassistenzsystem die Lenkung des Kraftfahrzeugs übernommen. Grundsätzlich kann es auch vorgesehen sein, dass das Kraftfahrzeug mit Hilfe des Fahrerassistenzsystems vollautonom manövriert wird.

In einer weiteren Ausführungsform ist ein Aktor der Lenkung des Kraftfahrzeugs in Abhängigkeit von dem Korrekturwert für den erwarteten Radlenkwinkel steuerbar. Anhand des Korrekturwerts kann eine Abweichung zwischen dem erwarteten Radlenkwinkel und dem tatsächlichen Radlenkwinkel bestimmt werden. Mit dem Aktor der Lenkeinrichtung kann nun die Lenkung entsprechend angesteuert werden, dass diese Abweichung zwischen dem tatsächlichen Radlenkwinkel und dem erwarteten Radlenkwinkel ausgeglichen wird. Bei dem Aktor der Lenkung kann es sich beispielsweise um den Antrieb der Servolenkung handeln. Alternativ dazu kann der Aktor separat zu dem Antrieb der Servolenkung ausgebildet sein.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Steuereinrichtung, das erfindungsgemäße Fahrerassistenzsystem sowie für das erfindungsgemäße Kraftfahrzeug.

Die Erfindung wird nun anhand von bevorzugten Ausführungsbeispielen sowie unter Bezugnahme auf die beigefügten Zeichnungen näher erläutert.

Dabei zeigen:

Fig. 1 ein Kraftfahrzeug gemäß einer Ausführungsform der vorliegenden Erfindung in einer Draufsicht, wobei sich das Kraftfahrzeug auf einer vereisten Fläche befindet; und

Fig. 2 das Kraftfahrzeug gemäß Fig. 1, welches sich auf einer asphaltierten Straße befindet.

In den Figuren werden gleiche und funktionsgleiche Elemente mit den gleichen Bezugszeichen versehen.

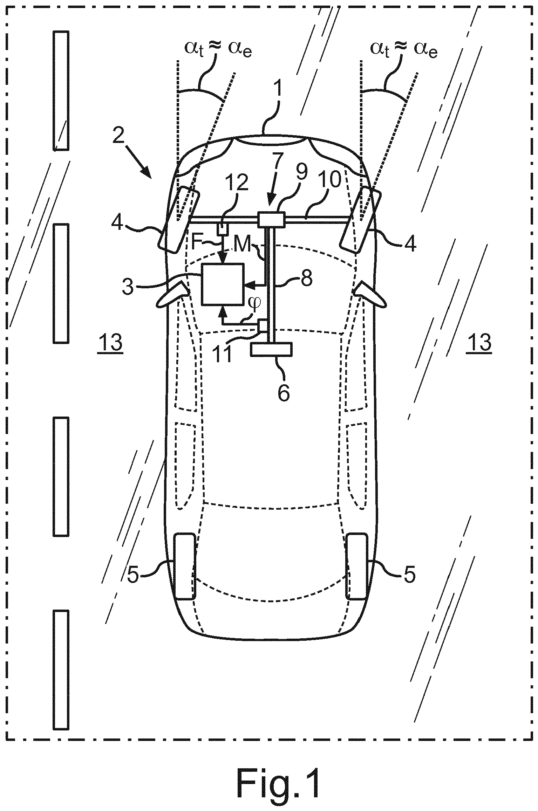

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, welches dazu dient, den Fahrer beim Führen des Kraftfahrzeugs 1 zu unterstützen. Das Fahrerassistenzsystem 2 umfasst wiederum eine Steuereinrichtung 3, die beispielsweise durch ein elektronisches Steuergerät des Kraftfahrzeugs 1 gebildet ist.

Darüber hinaus umfasst das Kraftfahrzeug 1 lenkbare Räder 4, die vorliegend einer Vorderachse des Kraftfahrzeugs 1 zugeordnet sind. Ferner umfasst das Kraftfahrzeug 1 die Hinterräder 5, welche nicht lenkbar ausgebildet sind. Das Kraftfahrzeug 1 umfasst zudem eine Lenkeinrichtung 6, welche beispielsweise ein Lenkrad sein kann. Diese Lenkeinrichtung 6 kann von dem Fahrer zum Durchführen eines Lenkmanövers entsprechend betätigt werden. Darüber hinaus umfasst das Kraftfahrzeug 1 eine Lenkung 7, welche die Lenkeinrichtung 6 mechanisch mit den lenkbaren Rädern 4 verbindet. Die vorliegend vereinfacht dargestellte Lenkung 7 umfasst eine Lenksäule 8 sowie eine Spurstange 10. Die Lenkung 7 ist vorliegend als Servolenkung ausgebildet und umfasst einen Antrieb 9, welcher dazu dient, die von dem Fahrer aufgebrachte Kraft zum Lenken zu verstärken. Der Antrieb 9 ist vorliegend als elektrischer Antrieb ausgebildet.

Das Fahrerassistenzsystem 2 umfasst ferner eine Sensoreinrichtung 11 in Form eines Lenkwinkelsensors. Der mit der Lenkeinrichtung bereitgestellte Lenkwinkel $\varphi$ wird von der Sensoreinrichtung 11 an die Steuereinrichtung 3 übertragen. In einer hier nicht dargestellten Speichereinheit der Steuereinrichtung 3 ist eine entsprechende Abbildungsvorschrift bzw. eine Lenkwinkelkelle hinterlegt, die den Zusammenhang zwischen dem Lenkwinkel φ und einem erwarteten Radlenkwinkel $\alpha_e$ beschreibt. Der Radlenkwinkel bzw. der erwartete Radlenkwinkel $\alpha_e$ ist der Winkel zwischen einer aktuellen Radebene der lenkbaren Räder 4 des Kraftfahrzeugs 1 und einer Geradeauslaufstellung der lenkbaren Räder 4. Die Lenkwinkelkennlinie bzw. die Abbildungsvorschrift kann beispielsweise in Form einer Look-Up-Tabelle in der Speichereinheit hinterlegt sein. Die Steuereinrichtung 3 kann unter Verwendung der Lenkwinkelkennlinie anhand des mit der Sensoreinrichtung 11 gemessenen Lenkwinkels φ den erwarteten Radlenkwinkel $\alpha_e$ bestimmen.

Darüber hinaus ist es vorgesehen, dass eine auf die Lenkung 7 wirkende Kraft F während eines Lenkmanövers bestimmt wird. Bei dem Lenkmanöver wird der Lenkwinkel φ verändert. Dies kann beispielsweise dadurch erfolgen, dass der Fahrer des Kraftfahrzeugs 1 an dem Lenkrad dreht. Bei den vorliegenden Beispiel werden die lenkbaren Räder 4 ausgehend von der Geradeauslaufstellung nach rechts gedreht. Das Fahrerassistenzsystem 2 umfasst einen Kraftsensor 12, mit dem die Kraft F bestimmt werden kann, die während des Lenkmanövers auf die Lenkung 7 wirkt. Der Kraftsensor 12 kann beispielsweise an einer Komponente der Lenkung 7 angeordnet sein. In dem vorliegenden Ausführungsbeispiel ist der Kraftsensor 12 an der Spurstange 10 angeordnet. Der Kraftsensor 12 kann insbesondere als Dehnmessstreifen ausgebildet sein. Der Kraftsensor 12 ist ferner zur Datenübertragung mit der Steuereinrichtung 3 verbunden. Somit kann die Steuereinrichtung 3 die auf die Lenkung 7 wirkende Kraft entsprechend bestimmen. Insbesondere kann die Steuereinrichtung 3 die auf die Lenkung 7 wirkende Kraft F in Abhängigkeit von der Zeit bestimmen.

In dem vorliegenden Ausführungsbeispiel ist es zudem vorgesehen, dass ein Drehmoment M, das mit dem Antrieb 9 während des Lenkmanövers bereitgestellt wird, erfasst wird. Dazu wird der von dem Antrieb 9 benötigte elektrische Strom während des Lenkmanövers erfasst und an die Steuereinrichtung 3 übertragen. Der elektrische Strom ist dabei proportional zu dem Drehmoment M, das der Antrieb 9 bereitstellt. Anhand des Drehmoments M kann dann die Steuereinrichtung 3 die Kraft F bestimmen, die während des Lenkmanövers auf die Lenkung 7 wirkt. Grundsätzlich kann es vorgesehen sein, dass das Fahrerassistenzsystem 2 entweder einen Kraftsensor 12 aufweist oder das von dem Antrieb 9 bereitgestellte Drehmoment M auswertet.

Auf Grundlage der Kraft F, die auf die Lenkung 7 während des Lenkmanövers wirkt, kann ein Korrekturwert bestimmt werden, der dazu dient, den erwarteten Radlenkwinkel $\alpha_e$ zu korrigieren. Als Ergebnis der Korrektur ergibt sich dann ein tatsächlicher Radlenkwinkel $\alpha_t$. Dem liegt die Erkenntnis zugrunde, dass die Kraft F die Reibung beschreibt, die zwischen den lenkbaren Rädern 4 und einer Fahrbahnoberfläche 13 herrscht. Wenn beispielsweise die Reibungskräfte zwischen den lenkbaren Rädern 4 und der Fahrbahnoberfläche 13 relativ groß sind, kann es der Fall sein, dass die lenkbaren Räder 4 den erwarteten Radlenkwinkel $\alpha_e$ nicht erreichen.

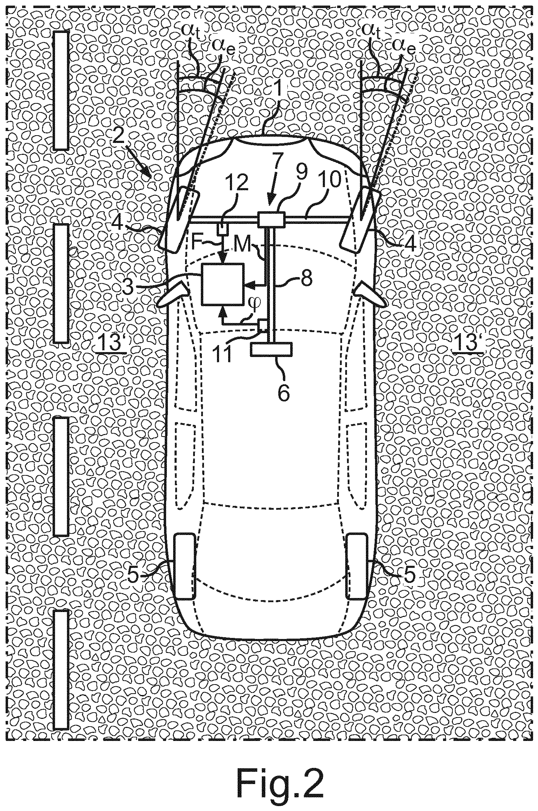

In dem Ausführungsbeispiel von Fig. 1 befindet sich das Kraftfahrzeug 1 auf einer Fahrbahnoberfläche 13, welche vereist ist. Dieses Ausführungsbeispiel beschreibt den Fall, für den die Reibungskraft zwischen den lenkbaren Rädern 4 und der Fahrbahnoberfläche 13 sehr gering ist. In diesem Fall entspricht der tatsächliche Radlenkwinkel $\alpha_t$ im Wesentlichen dem erwarteten Radlenkwinkel $\alpha_e$. Im Vergleich hierzu zeigt Fig. 2 ein Beispiel, bei dem sich das Kraftfahrzeug 1 auf einer asphaltierten Straße befindet. Hierbei ist die Fahrbahnoberfläche 13 entsprechend rau, wodurch die Reibungskraft zwischen den Reifen bzw. den lenkbaren Rädern 4 und der Fahrbahnoberfläche 13 verhältnismäßig hoch ist. In diesem Fall wird bei der Durchführung des Lenkmanövers in Folge der elastischen Eigenschaften der Lenkung 7 der erwartete Radlenkwinkel $\alpha_e$ nicht erreicht. Der tatsächliche Radlenkwinkel $\alpha_t$ ist also kleiner als der erwartete Radlenkwinkel $\alpha_e$.

Die erhöhte Reibungskraft zwischen den lenkbaren Rädern 4 und der Fahrbahnoberfläche 13 kann anhand der Kraft F, die auf die Lenkung 7 wirkt, bestimmt werden. Anhand der Kraft F kann dann ein Korrekturwert k zum Korrigieren des erwarteten Radlenkwinkels $\alpha_e$ bestimmt werden. Dieser Korrekturwert k ist abhängig von der Kraft F, die wiederum in Abhängigkeit von dem Lenkwinkel φ, der Zeit t, einer Geschwindigkeit v des Kraftfahrzeugs 1 und weiteren Parametern abhängt. Dies kann anhand folgender Formel beschrieben werden:

$$k = \int_{Man\ddot{o}ver} f\left(F(\varphi, v, t, ...)\right).$$

Um den tatsächlichen Radlenkwinkel $\alpha_t$ zu bestimmen, kann der erwartete Radlenkwinkel $\alpha_e$ mit dem Korrekturwert k multipliziert werden:

$$\alpha_t = k \cdot \alpha_e.$$

Grundsätzlich kann es auch vorgesehen sein, dass zusätzlich die Geschwindigkeit des Kraftfahrzeugs 1 während des Lenkmanövers erfasst wird. Es kann auch vorgesehen sein, dass die Umgebungstemperatur während des Lenkmanövers bestimmt wird. Insgesamt können mit entsprechenden Sensoren unterschiedlichste Umgebungsparameter bestimmt werden und an die Steuereinrichtung 3 übertragen werden. Diese können dann bei dem Bestimmen des Korrekturwerts berücksichtigt werden. Auf diese Weise kann der tatsächliche Radlenkwinkel $\alpha_t$ besonders präzise bestimmt werden.

**Patentansprüche**

1. Verfahren zum Bestimmen eines aktuellen Radlenkwinkels ($\alpha_t$) von lenkbaren Rädern (4) eines Kraftfahrzeugs (1), bei welchem ein Lenkwinkel ($\varphi$), welcher mittels einer Lenkeinrichtung (6) des Kraftfahrzeugs (1) nach einem Durchführen eines Lenkmanövers vorgegeben wird, mittels einer Sensoreinrichtung (11) erfasst wird und anhand einer vorbestimmten Abbildungsvorschrift, welche eine Abhängigkeit eines erwarteten Radlenkwinkels ($\alpha_e$) von dem Lenkwinkel ($\varphi$) beschreibt, der erwartete Radlenkwinkel ($\alpha_e$) bestimmt wird, eine auf eine Lenkung (7) des Kraftfahrzeugs (1) wirkende Kraft (F) während des Lenkmanövers bestimmt wird, wobei die Lenkung (7) ein Drehmoment von der Lenkeinrichtung (6) auf die lenkbaren Räder (4) überträgt, **dadurch gekennzeichnet, dass** anhand der bestimmten Kraft (F) ein Korrekturwert zum Korrigieren des erwarteten Radlenkwinkels ($\alpha_e$) bestimmt wird.

2. Verfahren nach Anspruch 1, **dadurch gekennzeichnet, dass** die auf die Lenkung (7) wirkende Kraft (F) anhand der Sensordaten zumindest eines Kraftsensors (12) bestimmt wird, welcher an oder in einer Komponente der Lenkung (7) angeordnet ist.

3. Verfahren nach Anspruch 1 oder 2, **dadurch gekennzeichnet, dass** die Lenkung (7) als Servolenkung ausgebildet ist, ein von einem Antrieb (9) der Servolenkung während des Lenkmanövers bereitgestelltes Drehmoment (M) bestimmt wird und die auf die Lenkung (7) wirkende Kraft (F) anhand des ermittelten Drehmoments (M) bestimmt wird.

4. Verfahren nach Anspruch 3, **dadurch gekennzeichnet, dass** der Antrieb (9) als elektrischer Antrieb ausgebildet ist, eine von dem elektrischen Antrieb während des Lenkmanövers benötigte elektrische Energie erfasst wird und das Drehmoment (M) anhand der benötigte elektrische Energie bestimmt wird.

5. Verfahren nach einem der vorhergehenden Ansprüche, **dadurch gekennzeichnet, dass** eine Geschwindigkeit des Kraftfahrzeugs (1) während des Lenkmanövers erfasst wird und der Korrekturwert zusätzlich in Abhängigkeit von der erfassten Geschwindigkeit bestimmt wird.

6. Verfahren nach Anspruch 5, **dadurch gekennzeichnet, dass** anhand der erfassten Geschwindigkeit bestimmt wird, ob das Kraftfahrzeug (1) steht oder fährt und der Korrekturwert in Abhängigkeit davon bestimmt wird, ob das Kraftfahrzeug (1) steht oder fährt.

7. Verfahren nach einem der vorhergehenden Ansprüche, **dadurch gekennzeichnet, dass** eine Temperatur in einem Umgebungsbereich des Kraftfahrzeugs (1) während des Lenkmanövers erfasst wird und der Korrekturwert zusätzlich in Abhängigkeit von der erfassten Temperatur bestimmt wird.

8. Verfahren nach einem der vorhergehenden Ansprüche, **dadurch gekennzeichnet, dass** anhand der bestimmten Kraft (F) erkannt wird, dass zumindest eines der lenkbaren Räder (4) während des Lenkmanövers auf ein Hindernis trifft und der Korrekturwert in Abhängigkeit davon bestimmt wird, ob das zumindest eine lenkbare Rad (4) auf das Hindernis trifft.

9. Steuereinrichtung (3) für ein Fahrerassistenzsystem (2) eines Kraftfahrzeugs (1), welches zum Durchführen eines Verfahrens nach einem der vorhergehenden Ansprüche ausgelegt ist.

10. Steuereinrichtung (3) nach Anspruch 9, **dadurch gekennzeichnet, dass** die Steuereinrichtung (3) dazu ausgelegt ist, mittels Odometrie eine Position des Kraftfahrzeugs (1) zu bestimmten und die Position anhand des Korrekturwerts für den erwarteten Radlenkwinkel ($\alpha_e$) anzupassen.

11. Fahrerassistenzsystem (2) für ein Kraftfahrzeug (1) mit einer Steuereinrichtung (3) nach einem der Ansprüche 9 bis 10.

12. Fahrerassistenzsystem (2) nach Anspruch 11, **dadurch gekennzeichnet, dass** das Fahrerassistenzsystem (2) dazu ausgelegt ist, das Kraftfahrzeug (1) in Abhängigkeit von dem Korrekturwert für den erwarteten Radlenkwinkel ($\alpha_e$) zu manövrieren

13. Fahrerassistenzsystem (2) nach Anspruch 11 oder 12, **dadurch gekennzeichnet, dass** ein Aktor der Lenkung (7) des Kraftfahrzeugs (1) in Abhängigkeit von dem Korrekturwert für den erwarteten Radlenkwinkel ($\alpha_e$) steuerbar ist.

14. Kraftfahrzeug (1) mit einem Fahrerassistenzsystem (2) nach einem der Ansprüche 11 bis 13.

## Claims

1. Method for determining a current wheel steering angle ($\alpha_t$) of steerable wheels (4) of a motor vehicle (1), in which a steering angle ($\varphi$) which is predefined by means of a steering device (6) of the motor vehicle (1) after the execution of a steering manoeuvre is sensed by means of a sensor device (11), and on the basis of a predetermined mapping rule which describes a dependence of an anticipated wheel steering angle ($\alpha_e$) on the steering angle ($\varphi$) the anticipated wheel steering angle ($\alpha_e$) is determined and a force (F) acting on a steering system (7) of the motor vehicle (1) during the steering manoeuvre is determined, wherein the steering system (7) transmits a torque from the steering device (6) to the steerable wheels (4),
**characterized in that**
a correction value for correcting the anticipated wheel steering angle ($\alpha_e$) is determined on the basis of the determined force (F).

2. Method according to Claim 1,
**characterized in that**
the force (F) acting on the steering system (7) is determined on the basis of the sensor data of at least one force sensor (12) which is arranged on or in a component of the steering system (7).

3. Method according to Claim 1 or 2,
**characterized in that**
the steering system (7) is embodied as a power steering system, a torque (M) which is made available by a drive (9) of the power steering system during the steering manoeuvre is determined, and the force (F) acting on the steering system (7) is determined on the basis of the acquired torque (M).

4. Method according to Claim 3,
**characterized in that**
the drive (9) is embodied as an electric drive, electrical energy which is required by the electric drive during the steering manoeuvre is sensed, and the torque (M) is determined on the basis of the required electrical energy.

5. Method according to one of the preceding claims,
**characterized in that**
a speed of the motor vehicle (1) during the steering manoeuvre is sensed, and the correction value is additionally determined as a function of the sensed speed.

6. Method according to Claim 5,
**characterized in that**
on the basis of the sensed speed it is determined whether the motor vehicle (1) is stationary or moving, and the correction value is determined as a function of whether the motor vehicle (1) is stationary or moving.

7. Method according to one of the preceding claims,
**characterized in that**
a temperature in a surrounding area of the motor vehicle (1) during the steering manoeuvre is sensed, and the correction value is additionally determined as a function of the sensed temperature.

8. Method according to one of the preceding claims,
**characterized in that**
on the basis of the determined force (F) it is detected that at least one of the steerable wheels (4) impacts against an obstacle during the steering manoeuvre, and the correction value is determined as a function of whether the at least one steerable wheel (4) impacts against the obstacle.

9. Control device (3) for a driver assistance system (2) of a motor vehicle (1), which driver assistance system (2) is designed to carry out a method according to one of the preceding claims.

10. Control device (3) according to Claim 9,
**characterized in that**
the control device (3) is designed to determine a position of the motor vehicle (1) by means of odometry, and to adapt the position on the basis of the correction value for the anticipated wheel steering angle ($\alpha_e$).

11. Driver assistance system (2) for a motor vehicle (1) having a control device (3) according to one of Claims 9 to 10.

12. Driver assistance system (2) according to Claim 11,
**characterized in that**
the driver assistance system (2) is designed to manoeuvre the motor vehicle (1) as a function of the correction value for the anticipated wheel steering angle ($\alpha_e$).

13. Driver assistance system (2) according to Claim 11 or 12,
**characterized in that**
an actuator of the steering system (7) of the motor vehicle (1) can be controlled as a function of the correction value for the anticipated wheel steering angle ($\alpha_e$).

14. Motor vehicle (1) having a driver assistance system (2) according to one of Claims 11 to 13.

## Revendications

1. Procédé pour déterminer un angle de braquage de

roue actuel ($\alpha_1$) de roues dirigeables (4) d'un véhicule automobile (1), dans lequel un angle de direction ($\varphi$) qui est prédéfini au moyen d'un dispositif de direction (6) du véhicule automobile (1) en fonction de la réalisation d'une manoeuvre de direction, est détecté au moyen d'un dispositif de capteur (11) et, à l'aide d'une instruction de reproduction prédéterminée, qui décrit une dépendance d'un angle de braquage de roue attendu ($\alpha_e$) de l'angle de direction ($\varphi$), l'angle de braquage de roue attendu ($\alpha_e$) est déterminé, une force (F) agissant sur une direction (7) du véhicule automobile (1) pendant la manoeuvre de direction est déterminée, la direction (7) transmettant un couple du dispositif de direction (6) aux roues dirigeables (4),
**caractérisé en ce**
**qu'**une valeur de correction pour corriger l'angle de braquage de roue attendu ($\alpha_e$) est déterminée à l'aide de la force déterminée (F).

2. Procédé selon la revendication 1,
**caractérisé en ce que**
la force (F) agissant sur la direction (7) est déterminée à l'aide des données de capteur d'au moins un capteur de force (12) qui est disposé sur ou dans un composant de la direction (7).

3. Procédé selon la revendication 1 ou 2,
**caractérisé en ce que**
la direction (7) est réalisée sous forme de direction assistée, un couple (M) fourni par un entraînement (9) de la direction assistée pendant la manoeuvre de direction est déterminé et la force (F) agissant sur la direction (7) est déterminée à l'aide du couple déterminé (M).

4. Procédé selon la revendication 3,
**caractérisé en ce que**
l'entraînement (9) est réalisé sous forme d'entraînement électrique, une énergie électrique nécessitée par l'entraînement électrique pendant la manoeuvre de direction est détectée et le couple (M) est déterminé à l'aide de l'énergie électrique nécessaire.

5. Procédé selon l'une quelconque des revendications précédentes,
**caractérisé en ce**
**qu'**une vitesse du véhicule automobile (1) pendant la manoeuvre de direction est détectée et la valeur de correction est déterminée en outre en fonction de la vitesse détectée.

6. Procédé selon la revendication 5,
**caractérisé en ce que**
l'on détermine, à l'aide de la vitesse détectée, si le véhicule automobile (1) est à l'arrêt ou en mouvement et la valeur de correction est déterminée en fonction du fait que le véhicule automobile (1) est à l'arrêt ou en mouvement.

7. Procédé selon l'une quelconque des revendications précédentes,
**caractérisé en ce**
**qu'**une température dans une région environnante du véhicule automobile (1) pendant la manoeuvre de direction est détectée et la valeur de correction est déterminée en outre en fonction de la température détectée.

8. Procédé selon l'une quelconque des revendications précédentes,
**caractérisé en ce que**
l'on reconnaît, à l'aide de la force déterminée (F) qu'au moins l'une des roues dirigeables (4) pendant la manoeuvre de direction vient heurter un obstacle et la valeur de correction est déterminée en fonction du fait que l'au moins une roue dirigeable (4) heurte ou non un obstacle.

9. Dispositif de commande (3) pour un système d'assistance au conducteur (2) d'un véhicule automobile (1) qui est conçu pour mettre en oeuvre un procédé selon l'une quelconque des revendications précédentes.

10. Dispositif de commande (3) selon la revendication 9,
**caractérisé en ce que**
le dispositif de commande (3) est conçu pour déterminer, par odométrie, une position du véhicule automobile (1) et pour ajuster la position à l'aide de la valeur de correction pour l'angle de braquage de roue attendu ($\alpha_e$).

11. Système d'assistance au conducteur (2) pour un véhicule automobile (1) comprenant un dispositif de commande (3) selon l'une quelconque des revendications 9 à 10.

12. Système d'assistance au conducteur (2) selon la revendication 11,
**caractérisé en ce que**
le système d'assistance au conducteur (2) est conçu de manière à manoeuvrer le véhicule automobile (1) en fonction de la valeur de correction pour l'angle de braquage de roue attendu ($\alpha_e$).

13. Système d'assistance au conducteur (2) selon la revendication 11 ou 12,
**caractérisé en ce**
**qu'**un actionneur de la direction (7) du véhicule automobile (1) peut être commandé en fonction de la valeur de correction pour l'angle de braquage de roue attendu ($\alpha_e$).

14. Véhicule automobile (1) comprenant un système d'assistance au conducteur (2) selon l'une quelconque des revendications 11 à 13.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2886422 A2
- WO 2005085042 A1
- EP 2022703 A2